# EUROPÄISCHE PATENTANMELDUNG

(11) **EP 4 672 050 A1**
(43) Veröffentlichungstag der Anmeldung: **31.12.2025**
(21) Anmeldenummer: 24185238.3
(22) Anmeldetag: 28.06.2024
(51) Int. Cl.: G06F 21/54, G06F 21/56, G06F 21/57

(54) **VERFAHREN ZUR ABSICHERUNG VON EINEM IN EINER TEXTDATEI GESPEICHERTEN SICHERHEITSRELEVANTEN PROGRAMM**

(71) Anmelder: Siemens Aktiengesellschaft, 80333 München (DE)
(72) Erfinder: Eitner, Christian, 8010 Graz (AT)
(74) Vertreter: Siemens Patent Attorneys

(57) **Zusammenfassung**

Ein computerimplementiertes Verfahren und eine Vorrichtung (100) zur Absicherung eines in mindestens einer Textdatei geschriebenen Quelltexts (50) eines sicherheitsrelevanten Programms (40) zum Betrieb eines Steuergeräts (1000) wird offenbart. Das Verfahren umfasst ein Auslesen (S100) von in dem Quelltext (50) des sicherheitsrelevanten Programms (40) eingespeicherten Metadaten, wobei die Metadaten eine zuvor für einen sicherheitsrelevanten Programmteil vorgespeicherte Prüfsumme umfassen, welche innerhalb des Quelltexts (50) einem dazu korrespondierenden sicherheitsrelevanten Programmteil zugeordnet ist. Das Verfahren umfasst ferner das Erzeugen (S200) einer aktuellen Prüfsumme auf Basis einer Zeichenkette des sicherheitsrelevanten Programmteils und das Erkennen (S300), ob das sicherheitsrelevante Programmteil verändert wurde durch Vergleich der aktuellen Prüfsumme mit der ausgelesenen Prüfsumme. Weiters erfolgt ein Ausgeben (S400) von einer Information an den Nutzer, ob ein sicherheitsrelevantes Programmteil verändert wurde in Antwort auf das Erkennen eines Unterschieds zwischen den verglichenen Prüfsummen.

## Beschreibung

Die Erfindung betrifft ein Verfahren zur Absicherung eines in einer Textdatei geschriebenen Quelltexts eines sicherheitsrelevanten Programms zum Betrieb eines Steuergeräts. Ferner umfasst die Erfindung eine Vorrichtung zur Datenverarbeitung, welche das Verfahren ausführt.

Wenn sicherheitsrelevante Programme für Steuergeräte wie beispielsweise Speicher-programmierbare Steuerungen, SPS, mit Sicherheitsrelevanz programmiert werden, so erfordern Standards wie beispielsweise die Norm IEC 61508, dass Maßnahmen ergriffen werden, um das Programm vor unbeabsichtigten Veränderungen zu schützen. Diese Maßnahmen können von einer anerkannten Prüfstelle, zum Beispiel dem TÜV, bewertet werden. Dabei werden die zum Erzeugen der Sicherheitsprogramme genutzten Mittel und Prozeduren auf geeignete Schutzmaßnahmen bewertet.

Durch das Aufkommen von Text-basierter Programmierung wird der Quelltext von Sicherheitsprogrammen häufig in normalen Dateien, d.h. in Textdateien, abgelegt. Dadurch können Änderungen oder Bearbeitungen des Quelltextes nicht durchgehend durch eine bestimmte Anwendung kontrolliert und geschützt werden. Solche Textdateien können im Prinzip durch jede Art von Bearbeitungsprogrammen, beispielsweise Software-Werkzeuge, manipuliert werden, da die Textdateien auf einem Dateisystem liegen und/oder in einem Quelltext-Verzeichnis wie beispielsweise GIT eingecheckt sind.

Entsprechende Maßnahmen für die sicherheitsrelevanten Anteile von Quellcode müssen daher in einer Weise sichergestellt werden, welche mit einer Text-basierten Programmierung kompatibel sind.

Bisher wurde sicherheitsrelevante Programmierung durch spezielle Programme, d.h. spezielle Software-Tools durchgeführt unter Verwendung von sogenannten Failsafe-Paketen. Dabei wird der Quelltext für ein sicherheitsrelevantes Programm als Binärdaten für ein Automationsprojekt eingefügt und kann nicht mehr ohne dieses spezielle Werkzeug geändert werden. Maßnahmen hinsichtlich der sicherheitsrelevanten Handhabung des Quelltextes des Sicherheitsprogramms sind daher in das entsprechende Werkzeug integriert. Allerdings ist der Nutzer dann auf diese enge Integration in das jeweilige spezielle Software-Werkzeug und dessen vordefinierte Spezifikationen festgelegt.

Es besteht allerdings die Anforderung, Quellcode-Dateien mit sowohl sicherheitsrelevanten Quelltext-Anteilen als auch Standard-Quelltext-Anteilen auf Basis von textbasierten Quelltexten sicher zu bearbeiten. Insbesondere soll dabei sichergestellt werden, dass unbeabsichtigte Änderungen durch Bearbeitungsprogramme (Software-Tools), an dem Quelltext erkannt werden, und diese Information an den Nutzer herangetragen und somit nicht unentdeckt bleiben.

Die Aufgabe der vorliegenden Erfindung besteht somit darin, eine Lösung bereitzustellen, sodass direkt aus einem textbasierten Quelltext eine sichere Programmierung von sicherheitsrelevanten Programmen für Steuergeräte möglich ist und unbeabsichtigte Veränderungen nicht unentdeckt bleiben, sodass die Integrität des Programmierprozesses gesichert wird.

Diese Aufgabe wird durch die folgende Offenbarung gelöst. Zudem werden weitere Aufgaben gelöst, welche in der folgenden Offenbarung beschrieben sind und/oder sich daraus ergeben.

### Zusammenfassung der Erfindung

Erfindungsgemäß wird ein computerimplementiertes Verfahren zur Absicherung eines in mindestens einer Textdatei geschriebenen Quelltexts eines sicherheitsrelevanten Programms zum Betrieb eines Steuergeräts beschrieben. Das Verfahren umfasst das Auslesen von in dem Quelltext des sicherheitsrelevanten Programms zusätzlich eingespeicherten Metadaten, wobei die Metadaten eine Prüfsumme umfassen, welche innerhalb des Quelltexts einem dazu korrespondierenden sicherheitsrelevanten Programmteil zugeordnet ist, wobei die Prüfsumme auf Basis einer Zeichenkette des dazu korrespondierenden sicherheitsrelevanten Programmteils zu einem vorherigen Zeitpunkt erzeugt wurde. Das Verfahren umfasst ferner das Erzeugen einer aktuellen Prüfsumme auf Basis einer Zeichenkette des sicherheitsrelevanten Programmteils. Weiterhin umfasst das Verfahren ferner das Erkennen, ob das sicherheitsrelevante Programmteil verändert wurde, und zwar durch Vergleich der aktuelle gebildeten Prüfsumme mit der ausgelesenen Prüfsumme. Ferner erfolgt das Ausgeben von einer Information an den Nutzer, dass das sicherheitsrelevante Programmteil verändert wurde in Antwort auf das Erkennen eines Unterschieds zwischen den verglichenen Prüfsummen.

Das Verfahren kann beispielsweise (automatisch) in Antwort auf ein Öffnen der Textdatei oder in Antwort auf eine Nutzereingabe zum Prüfen auf Änderungen im Programm ausgeführt werden. Ein Quelltext ist mit anderen Worten ein Quellcode. Der Quelltext ist Text-basiert und in eine Textdatei geschrieben. Die Erfindung ist dabei nicht auf eine Programmiersprache beschränkt, sondern ist auf beliebige Programmiersprachen und deren Grammatik bzw. deren Funktions- und/oder Prozedureinheiten anwendbar. Bei dem Anzeigemittel handelt es sich bevorzugt um ein Display wie einen Bildschirm beziehungsweise einen Monitor. Ein sicherheitsrelevanter Programmteil kann beispielsweise eine Programmfunktion sein, wobei die Erfindung nicht darauf beschränkt ist. Ein Bearbeitungsprogramm, mit anderen Worten ein Bearbeitungstool, kann beispielsweise ein Parsing-Tool sein. Das Bearbeitungsprogramm führt bei Ausführung durch den Prozessor die Schritte des Verfahrens durch. Die Textdatei kann eine normale Datei sein und/oder eine XML-Datei oder andere Dateiformate haben mit textuellem Inhalt. Die Metadaten sind mit anderen Worten Metadatenfelder oder Datenfelder, welche in den Quelltext eingefügt bzw. eingeschrieben sind. D.h., die Metadaten sind somit dem Quelltext hinzugefügt. Diese haben innerhalb des Quelltextes eine Lage, so dass sie einem korrespondierenden sicherheitsrelevanten Programmteil zugeordnet werden können. Dadurch können diese Programmteile als sicherheitsrelevant ausgewiesen werden und von einem Bearbeitungsprogramm, welches die Metadaten einliest, als zusammengehörig erkannt werden. Die Metadaten sind somit Bestandteile des Quelltextes. Die Metadaten entsprechen Textteilen, welche gemäß einer Grammatik einer Programmiersprache als Kommentare bezeichnet werden. Die Prüfsumme wird durch Einlesen der Zeichenkette des Programmteils, d.h. einer Programmfunktion, bestimmt. Die Speicherung der Metadaten als Kommentar oder anderen Hilfsdatenformaten basierend auf der Grammatik der jeweiligen Programmiersprache umfasst die Zuordenbarkeit zum jeweiligen sicherheitsrelevanten Programmteil (z.B. einer Funktion oder einer Prozedur), welcher im Quelltext eingeschrieben ist. Das Verfahren kann beispielsweise durch einen Prozessor ausgeführt werden, welcher mit einem Speicher operativ verbunden ist, durch Ausführen eines in den Speicher geladenen Bearbeitungsprogramm zum Bearbeiten und/oder Ändern des Quelltexts des sicherheitsrelevanten Programms. Das Ausgeben von Information kann ein Signal umfassen oder eine Nachricht in Textform oder als Audioausgabe, wobei die Erfindung nicht darauf beschränkt ist.

Durch die oben beschriebenen Schritte können unbeabsichtigte Änderungen im sicherheitsrelevanten Programmteilen mittels der Information in den Metadaten detektiert und ausgegeben werden. Dadurch bleiben Veränderungen nicht unentdeckt, sodass eine sichere Programmierung ermöglicht wird. Dies gelingt dadurch, dass mittels der Metadaten (welche die bei vorheriger Änderung des sicherheitsrelevanten Programmteils erstellte Prüfsumme(n) umfasst) eine direkte Prüfung auf Konsistenz, d.h. auf Nicht-Veränderung bzw. Integrität des Quellcodes durch nicht sicherheitsrelevante Werkzeuge oder unbeabsichtigte Änderungen (z.B. beim Speichern) erfolgen kann. Dadurch wird die Textbasierte Programmierung sicherer, da Änderungen nicht unentdeckt bleiben und gegebenenfalls direkt behoben werden können. Der Nutzer bzw. Programmierer weiß dann, dass Änderungen erfolgt sind und kann entsprechende Diagnoseschritte ausführen. Dadurch kann auch im Einsatz im Steuergerät, z.B. bei SPS, ein Effekt erzielt werden, da das sicherheitsrelevante Programm mit höherer Wahrscheinlichkeit fehlerfrei und somit sicher programmiert ist, ohne dabei die Vorteile der flexiblen Text-basierten Programmierung zu reduzieren.

In einer bevorzugten Ausführungsform wird die Prüfsumme durch eine Hash-Funktion berechnet. Die Prüfsumme ist somit bevorzugt ein Hashwert. Weiter bevorzugt handelt es sich bei dem Hash-Wert um einen SHA3-512 Hash-Wert. Ein Hash-Wert ermöglicht ein besonders kompaktes Speichern und zudem durch diese Kompaktheit eine schnelle Auswertung für den Vergleich zwischen dem vorherigen Hashwert und dem aktuellen Hashwert, so dass ein schnelles Berechnen für den Vergleich erfolgen kann.

Bevorzugt umfasst das Verfahren das Erzeugen der Prüfsumme durch Einlesen der Zeichenkette des sicherheitsrelevanten Programmteils in umgekehrter Zeichenreihenfolge. Dadurch kann eine versehentliche Erzeugung von Prüfsummen nahezu ausgeschlossen werden, da zum Erzeugen der Prüfsumme ein Operationsschritt der Zeichenumkehr durchgeführt werden muss. Dieser Zusatzschritt ist jedoch ein deterministischer Schritt, welcher eine zufällige oder unbeabsichtigte Erzeugung unwahrscheinlich macht. Somit wird die Sensitivität des Erkennungs- und Vergleichsverfahrens erhöht.

In einer bevorzugten Ausführungsform erfolgt das Darstellen auf einem Anzeigemittel, durch Highlighten bzw. Hervorheben des sicherheitsrelevanten Programmteils in dem Quelltext, welches zu der aus den Metadaten ausgelesenen Prüfsumme korrespondiert. Das Anzeigemittel ist beispielsweise ein Display. Das Highlighten bzw. Hervorheben kann umfassen, dass die Textbestandteile des sicherheitsrelevanten Programmteils farbig und/oder durch eine Textformatierung hervorgehoben werden. Beispielsweise kann der sicherheitsrelevanter Programmteil in einer anderen Textfarbe dargestellt werden, und/oder durch eine andere Farbe hinterlegt werden, und/oder eine andere Textformatierung wie Textgröße, kursiv, fett, usw. erhalten. Dadurch wird der Benutzer darauf aufmerksam gemacht, dass es sich bei diesem Programmteil um ein sicherheitsrelevantes Programm handelt. Insbesondere wird ein Benutzer zuverlässig auf diese Textstelle aufmerksam gemacht. Die Erfindung hat den Vorteil, dass durch die in dem Quelltext direkt beschriebenen Metadaten eine Kennzeichnung von sicherheitsrelevanten Programm-Quelltexten/Textteilen durch die ausgelesen Prüfsumme erfolgen kann.

In einer bevorzugten Ausführungsform umfasst das Verfahren das Prüfen einer Änderungsberechtigung des Nutzers für ein sicherheitsrelevantes, ggf. hervorgehobenes Programmteil mittels eines in ein Eingabefeld auf dem Anzeigemittel einzugebendes Passwort und/oder einer Überprüfung einer Mindestberechtigung des Nutzers gemäß eines Rechtevergabesystems. Das Verfahren umfasst ferner das Freigeben zur Bearbeitung/Änderung des sicherheitsrelevanten Programmteils in Antwort auf eine Verifikation, z.B. Bestätigung durch Abgleich mit vorgespeicherten Berechtigungsdaten, des vom Benutzer eingegebenen Passworts und/oder das Vorhandenseins der Mindestberechtigung des Nutzers gemäß des Rechtevergabesystem. Dadurch kann sichergestellt werden, dass sicherheitsrelevante Programmteile nur von Berechtigten verändert werden können. In einem anderen Fall wird eine Freigabe bzw. Bearbeitungsberechtigung verweigert, sodass das Bearbeitungsprogramm dieses Programmteil nicht ändern bzw. bearbeiten kann. Dadurch wird eine zusätzliche Schutzfunktion erreicht.

In einer bevorzugten Ausführungsvariante umfassen die in dem Quelltext abgelegten Metadaten eine Liste von zeitlich vorherigen, d.h. früheren, Prüfsummen des sicherheitsrelevanten Programmteils. Das Verfahren umfasst, in Antwort auf das Erkennen eines Unterschieds zwischen den verglichenen Prüfsummen, das Auslesen der Liste von zeitlichen vorherigen Prüfsummen des sicherheitsrelevanten Programmteils aus den Metadaten in dem Quelltext und das Darstellen der Liste der zeitlich vorherigen Prüfsummen auf dem Anzeigemittel. Dadurch wird durch die Metadaten in dem Quelltext eine feinere Diagnosemöglichkeit bereitgestellt. Somit wird eine Historie bzw. Änderungshistorie der zuvor generierten Prüfsummen bereitgestellt, welche hilft, um Fehler oder unerwünschte Änderungen zeitlich einzuordnen. Dadurch kann eine ungewollte oder fremddurchgeführte Änderung des sicherheitsrelevanten Programmteils besser eingegrenzt werden. Dies ermöglicht die partielle Verfolgung der Historie ohne zuverlässige Synchronisierung von Datum und Uhrzeiten zwischen den einzelnen Bearbeitungsprogrammen.

Bevorzugt umfasst das Verfahren das Erzeugen eines Identifikators für ein Bearbeitungsprogramm, welches Änderungen und/oder Bearbeitungen am sicherheitsrelevanten Programmteil im Quelltext vorgenommen hat und das Einschreiben des Identifikators als Metadaten in den Quelltext. Dadurch kann in den Metadaten eine Identifikation bzw. ein "Fingerabdruck" eines Bearbeitungsprogramms, wie beispielsweise eines Software-Tools oder eines Parsing-Tools, hinterlassen werden, wenn durch das entsprechende Programm Änderungen an sicherheitsrelevanten Programmteilen vorgenommen wurden. Ein Identifikator kann dabei eine UUID, universally unique Identifier, sein. Zusätzlich kann auch die neu berechnete Prüfsumme abgelegt werden. Dadurch werden automatisch Fingerabdrücke aller Bearbeitungsprogramme, welche Änderungen durchgeführt haben, direkt in den Metadaten festgehalten und können somit für Diagnosezwecke ausgelesen und zugeordnet werden.

In einer bevorzugten Ausführungsvariante umfassen die in dem Quelltext abgelegten Metadaten eine Liste von Identifikatoren für Bearbeitungsprogramme, und das Verfahren in Antwort auf das Erkennen eines Unterschieds zwischen den verglichenen Prüfsummen ferner das Auslesen der Liste der Identifikatoren der jeweiligen Bearbeitungsprogramme, welche Änderungen an sicherheitsrelevanten Programmteilen vorgenommen haben aus den Metadaten in dem Quelltext. Ferner erfolgt das Darstellen der Identifikatoren und/oder der zugehörigen Bearbeitungsprogramme auf dem Anzeigemittel. Hierdurch wird durch die Metadaten in dem Quelltext eine feinere Diagnosemöglichkeit bereitgestellt. Somit wird eine Historie bzw. Änderungshistorie der Programme, welche Änderungen vorgenommen haben, bereitgestellt. Dies hilft, Herkunft und Ursache von Fehlern oder unerwünschte Änderungen lokalisieren zu können. Dadurch kann eine ungewollte bzw. fremddurchgeführte Änderung des sicherheitsrelevanten Programmteils besser eingegrenzt und aufgeklärt werden.

Bevorzugt umfasst das Verfahren das Darstellen der Identifikatoren für ein sicherheitsrelevantes Programmteil in zeitgeordneter Reihenfolge. Somit können sowohl Zeitpunkte als auch jene Bearbeitungsprogramme, welche für die Änderungen verantwortlich waren, leichter identifiziert werden, um eine Fehlerursache zu ermitteln und einzugrenzen. Dadurch werden Diagnosefähigkeiten durch die Metadaten verbessert.

Bevorzugt umfasst das Ausgeben einer Information ein optisches und/oder akustisches Signalisieren. Die Signalisierung kann durch eine farbliche und/oder eine Format-ändernde Hervorhebung geschehen. Ferner kann der Nutzer über das Anzeigemittel informiert werden, beispielsweise durch Öffnen eines Fensters mit dem Informationsgehalt.

In einer bevorzugten Ausführungsform ist das sicherheitsrelevante Programm zum Betrieb eines Steuergeräts ausgelegt, um zumindest einen Teil einer elektrischen Anlage zu steuern. Beispielsweise steuert das sicherheitsrelevante Programm einen Ausgangsstrom und/oder eine Ausgangsspannung einer elektrischen Anlage und/oder überwacht einen Eingangsstrom und/oder eine Eingangsspannung. Dies ist jedoch nur ein Beispiel. Die Integrität des sicherheitsrelevanten Programms wird durch das vorliegende Verfahren erhöht und verbessert. Dadurch kann auch im Einsatz im Steuergerät, z.B. bei SPS, ein Effekt erzielt werden, da das sicherheitsrelevante Programm sicher programmiert ist, ohne dabei die Vorteile der Textbasierten Programmierung zu reduzieren.

Erfindungsgemäß wird ferner ein Bearbeitungsprogramm beschrieben, umfassend Befehle, die bei der Ausführung durch einen Prozessor oder Computer diesen veranlassen, das Verfahren nach einem der oberen Ausführungen auszuführen.

Erfindungsgemäß wird ferner ein computerlesbares (Speicher)medium beschrieben, umfassend Befehle, die bei der Ausführung durch einen Computer oder Prozessor diesen veranlassen, die Schritte des Verfahrens nach den oben beschriebenen Ausführungen durchzuführen.

Erfindungsgemäß wird ferner eine Vorrichtung zur Datenverarbeitung beschrieben. Die Vorrichtung umfasst einen Prozessor, welcher mit einem Speicher operativ verbunden ist. Der Prozessor ist eingerichtet, durch Ausführen eines in den Speicher geladenen Bearbeitungsprogrammes zum Bearbeiten und/oder Ändern des Quelltexts des sicherheitsrelevanten Programms das Verfahren gemäß den beschriebenen Ausführungsformen auszuführen. Mit einer solchen Vorrichtung zur Datenverarbeitung können die oben für das vorgeschlagene Verfahren genannten Vorteile vorteilhaft auch für die Vorrichtung zur Datenverarbeitung realisiert werden.

### Kurzbeschreibung der Zeichnungen

- Figur 1: zeigt ein schematisches Flussdiagramm des Verfahrens gemäß Ausführungsformen der Erfindung, und
- Figur 2: zeigt eine schematische Darstellung einer Vorrichtung zur Datenverarbeitung gemäß einer Ausführungsform der Erfindung.

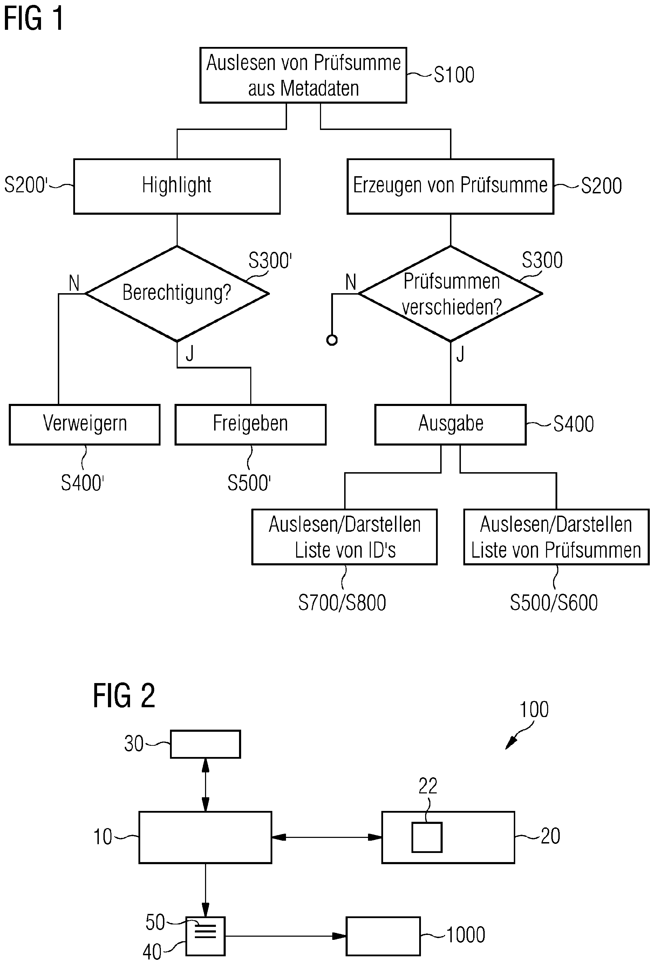

In der Figur 1 wird ein Verfahren zur Absicherung eines sicherheitsrelevanten Programms 40 zum Betrieb eines Steuergeräts 1000 beschrieben. Figur 2 beschreibt eine dazu korrespondierende Vorrichtung 100 zur Datenverarbeitung, welche das Verfahren ausführen kann. Das sicherheitsrelevante Programm 40 kann sich in einer Entwicklungs- bzw. Programmier-Phase vor Fertigstellung befinden. Das sicherheitsrelevante Programm 40 stellt das Bearbeitungsziel dar, welches vor unbeabsichtigten Änderungen geschützt werden soll. Das im Folgenden beschriebene Verfahren kann beispielsweise (automatisch) in Antwort auf ein Öffnen der Textdatei oder in Antwort auf eine Nutzereingabe zum Prüfen auf Änderungen im sicherheitsrelevanten Programm ausgeführt werden.

Der Quelltext 50 des sicherheitsrelevanten Programms 40 ist dabei in mindestens einer Textdatei eingeschrieben bzw. gespeichert. Diese mindestens eine Textdatei kann in einem Datei-System oder in einem Quellcode-Repository wie z. B. GIT abgelegt sein. In einem Beispiel ist die eine gewöhnliche Textdatei oder eine XML-Textdatei, kann aber jedes Format aufweisen.

Das Steuergerät 1000, für welche das sicherheitsrelevante Programm 40 entwickelt wird, kann eine Speicher-programmierbare Steuerung, SPS, sein. Jedoch kann die Programmierung auch für andere Steuergeräte erfolgen, welche neben sicherheitsrelevanten auch nicht sicherheitsrelevante Programme ausführen können.

Das Verfahren wird durch einen Prozessor 10 ausgeführt, welcher mit einem Speicher 20 verbunden ist. Dies ist in Figur 2 schematisch gezeigt. Insbesondere wird dazu ein Bearbeitungsprogramm 22 bzw. Bearbeitungstool, wie zum Beispiel ein Parsing-Tool, zum Bearbeiten und/oder Ändern des Quelltexts 50 des sicherheitsrelevanten Programms 40 in den Speicher 20 geladenen. Das Bearbeitungsprogramm 22 ist ein Tool bzw. Werkzeug, mit welchem der Quelltext 50 des sicherheitsrelevanten Programms 40 bearbeitet bzw. geändert werden kann.

In einem ersten Schritt des Verfahrens erfolgt ein Auslesen S100 von in dem Quelltext 50 des sicherheitsrelevanten Programms 40 eingespeicherten Metadaten. In den Metadaten sind zusätzliche Informationen enthalten zum Schutz des sicherheitsrelevanten Programms vor unerwünschter Veränderung und/oder für Diagnosezwecke wie weiter unten beschrieben. Je nach Programmiersprache und deren Grammatik sind die Metadaten als Kommentar oder als andere Hilfsdatenformate in dem Quelltext 50 eingefügt.

Die hinzugefügten Metadaten sind dabei nicht auf eine Programmiersprache beschränkt. Allen textbasierten Programmiersprachen liegt eine Grammatik (Syntax) zugrunde, die unter anderem Funktions- beziehungsweise Prozedur-Einheiten beschreibt. Beispiele für eingefügte Metadaten im Quelltext 50 werden anhand von Beispielen beschrieben, wobei die Erfindung nicht auf diese Beispiele beschränkt ist, sondern diese lediglich zur Veranschaulichung dienen.

Insbesondere ist die Integration der Metadaten nicht auf ein bestimmtes Format des Quelltextes und/oder ein Format einer Text-Datei beschränkt, sondern nutzt die Kommentarfunktion und/oder andere Hilfsdatenformate, welche für eine große Bandbreite an Quelltext-Formaten definiert sind.

Beispielsweise kann eine Integration in eine XML-Textdatei als Beispiel einer Textdatei erfolgen. Dabei werden XML-Elemente für die jeweiligen Daten definiert. Diese können beispielsweise wie folgt aussehen:

```
     <NormaleDaten>Daten kommen hierhin.</NormaleDaten>
     <SicherheitsMetadatenFeld1>Inhalt des sicherheitsrelevanten
     Metadatenfeldes 1 </SicherheitsMetadatenFeld1>
     <SicherheitsMetadatenFeld2>Inhalt des sicherheitsrelevanten
     Metadatenfeldes 2 </SicherheitsMetadatenFeld2>
```

Auf Ebene dieser Funktionen können die oben erwähnten zusätzlichen Metadaten als Kommentare hinzugefügt werden, wie es in dem oberen Beispiel durch die Metadatenfelder 1 und 2 gezeigt ist. Durch die jeweilige Lage im Quelltext können einzelne Programm-Funktionen als sicherheitsrelevant ausgewiesen werden. Ein weiteres Beispiel der Integration von Metadaten wird anhand der Programmiersprache "Structured Text" beschrieben. Hier kann die Integration von Metadaten (im Folgenden Beispiel sind dies drei Metadatenfelder) durch das Hinzufügen von Kommentaren auf Datei-Ebene (am Anfang der Datei) oder an definierten Positionen gemäß der Programmiersprachen-Syntax erfolgen. Beispielsweise kann hier der Quelltext 50 wie folgt aufgebaut sein, wobei die Erfindung nicht darauf beschränkt ist:

```
     // Beginn des Structured Text Quelltext
     // SicherheitsMetadatenFeld1=Inhalt des
     sicherheitsrelevanten Metadatenfeldes 1, global für Datei
     // SicherheitsMetadatenFeld2=Inhalt des
     sicherheitsrelevanten Metadatenfeldes 2, global für Datei
     CONFIGURATION StandardKonfiguration
     VAR_GLOBAL
          // [...]
          END_VAR
     END CONFIGURATION
     // SicherheitsMetadatenFeld3=Inhalt des
     sicherheitsrelevanten Metadatenfeldes 3, lokal für
     Funktionsblock FB_Timed_Counter
     FUNCTION_BLOCK FB_Timed_Counter
     // [...] weitere Programm-Anweisungen für den Function Block
     END_FUNCTION_BLOCK
```

Die Metadaten umfassen ferner eine (vorgespeicherte) Prüfsumme. Diese Prüfsumme ist in den Metadaten innerhalb des Quelltexts 50 derart positioniert, dass diese einem dazu korrespondierenden sicherheitsrelevanten Programmteil zugeordnet werden kann. Dies ergibt sich aus der Lage in dem Quelltext. Dadurch kann ein auslesendes Bearbeitungsprogramm 22 der in den Metadaten vorgespeicherten Prüfsumme ein korrespondierendes sicherheitsrelevantes Programmteil zuordnen. Beispielsweise sind die Metadaten SicherheitsMetadatenFeld1 und SicherheitsMetadatenFeld2 der Programm-Funktion CONFIGURATION zugeordnet durch deren Lage im Quelltext 50. Metadaten, welche eine Prüfsumme umfassen, können rein beispielhaft als SafetySourceCodeSignature bezeichnet werden und beispielsweise einer der oberen allgemein formulierten Metadatenfelder entsprechen.

Die in den Metadaten abgelegte bzw. eingespeicherte Prüfsumme ist somit vorgespeichert und wurde auf Basis einer Zeichenkette des dazu korrespondierenden sicherheitsrelevanten Programmteils zu einem vorherigen Zeitpunkt erzeugt und als Metadatum eingespeichert. Diese vorgespeicherte Prüfsumme dient als Referenz, um Änderungen am sicherheitsrelevanten Programmteil feststellen zu können.

In einem weiteren Schritt erfolgt nun das Erzeugen S200 einer aktuellen Prüfsumme durch das Bearbeitungsprogramm 22 auf Basis einer Zeichenkette des sicherheitsrelevanten Programmteils. Die Prüfsumme ist dabei bevorzugt durch eine Hash-Funktion berechnet und erzeugt somit einen kompakten Hashwert, welcher durch die Kompaktheit für die weitere Bearbeitung vorteilhaft ist. Ferner kann das Erzeugen S200 der Prüfsumme durch Einlesen der Zeichenkette in umgekehrter Zeichenreihenfolge des sicherheitsrelevanten Programmteils erfolgen. Dadurch kann eine versehentliche Erzeugung von Prüfsummen nahezu ausgeschlossen werden, da zum Erzeugen der Prüfsumme dieser Operationsschritt der Zeichenumkehr durchgeführt werden muss und so die Wahrscheinlichkeit einer zufällig versehentlich korrekten Berechnung minimiert wird.

Danach folgt ein Konsistenzprüfschritt, welcher prüft, ob sich das sicherheitsrelevante Programmteil verändert hat. Hierbei wird erkannt S300, ob das sicherheitsrelevante Programmteil verändert wurde durch Vergleich der aktuellen Prüfsumme mit der vorgespeicherten ausgelesenen Prüfsumme, d.h. mit der vorher eingespeicherten Prüfsumme als Vergleichsreferenz.

In einem weiteren Schritt erfolgt dann das Ausgeben S400 einer Information an den Nutzer, dass das sicherheitsrelevante Programmteil verändert wurde, falls ein Unterschied zwischen den verglichenen Prüfsummen erkannt wurde (J in S300). Eine Ausgabeeinheit wie das Anzeigemittel 300 kann dazu beispielsweise verwendet werden. Das Ausgeben S400 von Information kann ein Signal umfassen, oder eine Nachricht in Textform, oder eine Audioausgabe, wobei die Erfindung nicht darauf beschränkt ist. Für den Fall, dass die Prüfsummen übereinstimmen, d.h. bei Gleichheit, (N in S300) wird erkannt, dass das sicherheitsrelevante Programmteil nicht verändert wurde. Eine Ausgabe ist dann nicht erforderlich oder kann als positive Rückmeldung an den Nutzer erfolgen. Mittels der Prüfsumme aus den Metadaten bleiben somit unbeabsichtigte Änderungen im Programmteil nicht unentdeckt. Somit kann das Programm vor unbeabsichtigten Änderungen geschützt werden und besser überwacht werden, sowie unbeabsichtigte Änderungen erkannt und behoben werden. Das Ausgeben S400 einer Information kann dabei ein optisches und/oder akustisches Signalisieren umfassen. Eine entsprechende Ausgabeeinheit kann dazu verwendet werden.

Das Verfahren kann ferner ein Darstellen S200' durch Highlighten/Hervorheben des sicherheitsrelevanten Programmteils in dem Quelltext 50 umfassen. Dies kann in Antwort auf ein Öffnen der Textdatei durch ein Bearbeitungsprogramm 22 auf Basis der eingelesenen Prüfsumme aus den Metadaten und dem zugeordneten sicherheitsrelevanten Programmteil erfolgen. Dabei wird auf dem Anzeigemittel 30 ein Highlighten bzw. Hervorheben dieses sicherheitsrelevanten Programmteils in dem Quelltext 50 bewirkt. Das Highlighten bzw. Hervorheben kann zum Beispiel durch eine farbliche und/oder eine Format-ändernde Hervorhebung des betroffenen sicherheitsrelevanten Programmteils im Quelltext 50 erfolgen. Dadurch wird der Nutzer auf die sicherheitsrelevanten Teilprogramme, und die somit sensiblen Programmteile, aufmerksam gemacht.

In einem weiteren optionalen Schritt kann ein Prüfen einer Änderungsberechtigung 5300` des Nutzers für das sicherheitsrelevante Programmteil erfolgen. Dies kann mittels eines in ein Eingabefeld auf dem Anzeigemittel 30 einzugebendes Passwort und/oder einer Überprüfung einer Mindestberechtigung des Nutzers gemäß eines Rechtevergabesystems erfolgen. Auch die Prüfung der Mindestberechtigung kann durch eine Eingabe vom Nutzer über ein Eingabefeld erfolgen. Eine solche Mindestberechtigung kann beispielsweise die Zuordnung einer Rolle mit Änderungsrechten von sicherheitsrelevanten Programmteilen sein. Die Änderungsberechtigung für den Nutzer wird dabei für das sicherheitsrelevante Programmteil bzw. für die sicherheitsrelevante Pragramm-Funktion geprüft oder auch für den gesamten Quelltext als Alternative.

Bei Verifikation (J in S300') des vom Benutzer eingegebenen Passworts und/oder bei Vorhandensein einer Mindestberechtigung des Nutzers gemäß eines Rechtevergabesystems, kann ein Freigeben S500' zur Bearbeitung und/oder Änderung des sicherheitsrelevanten Programmteils erfolgen. Andernfalls (N in S300') kann eine Bearbeitung und/oder Änderung des sicherheitsrelevanten Programmteils verhindert werden S400'. Der Schritt des Prüfen einer Änderungsberechtigung 5300` erfordert nicht zwingend ein vorheriges Highlighten des sicherheitsrelevanten Programmteils. Jedoch kann das Highlighten mit Vorteil den Nutzer auf eine mögliche Berechtigungsabfrage hinweisen, falls der Nutzer ein sicherheitsrelevantes Programmteil verändern möchte.

Weitere Metadaten bzw. Metadatenfelder können in dem Quelltext 50 eingespeichert bzw. eingeschrieben werden, um beispielsweise Diagnosefähigkeiten zu verfeinern und damit zu erleichtern.

Beispielsweise können die in dem Quelltext 50 abgelegten bzw. eingespeicherten Metadaten eine Liste von zeitlich vorherigen Prüfsummen des sicherheitsrelevanten Programmteils umfassen. Ein solches Metadatenfeld kann beispielsweise als PreviousSafetySourceCodeSignatures bezeichnet werden. Die zeitlich vorherigen Prüfsummen können dabei chronologisch, insbesondere umgekehrt chronologisch, in den Metadaten zur Wiedergabe eingespeichert sein. Diese Metadaten sind entsprechend dem sicherheitsrelevanten Programmteil im Quelltext zugeordnet.

In Antwort auf das Erkennen eines Unterschieds zwischen den verglichenen Prüfsummen (J in S300), kann dann ein Schritt des Auslesens S500 der Liste von zeitlichen vorherigen, d.h. von den früheren, Prüfsummen des sicherheitsrelevanten Programmteils aus den beschriebenen Metadaten in dem Quelltext 50 erfolgen. Dann erfolgt ein Darstellen S600 der Liste der zeitlich vorherigen Prüfsummen auf dem Anzeigemittel 30. Somit wird eine feinere Diagnosemöglichkeit bereitgestellt, bei welcher eine Änderungshistorie der zuvor generierten Prüfsummen bereitgestellt und genutzt werden kann, um Fehler oder unerwünschte Änderungen zeitlich zu identifizieren und um diese besser einzugrenzen und zuzuordnen. Wenn das Bearbeitungsprogramm 22 Änderungen vorgenommen hat, so kann es eine aktuelle Prüfsumme in dieses Metadatenfeld zum Fortsetzen der Liste schreiben.

Ferner kann das Verfahren das Erzeugen eines Identifikators für das Bearbeitungsprogramm 22 umfassen, wenn das Bearbeitungsprogramm 22 Änderungen und/oder Bearbeitungen am Quelltext 50 beziehungsweise an einem sicherheitsrelevanten Programmteil vorgenommen hat. Dann erfolgt ein Einschreiben des Identifikators als Metadaten in den Quelltext 50. Eine neue Prüfsumme des geänderten/bearbeiteten Programmteils wird zur Referenz nach erfolgter Änderung/Bearbeitung an die entsprechende Metadaten-Stelle eingeschrieben, sodass die neue Prüfsumme wieder als valide Referenz für einen neuen Konsistenzcheck zur Verfügung steht. Dadurch hinterlässt jedes Bearbeitungsprogramm oder Tool eine Identifikation ("Fingerabdruck") direkt in dem Quelltext durch Metadaten. Als Identifikator kann ein eindeutiger Identifikator wie beispielsweise ein UUID verwendet werden, wobei jedem Bearbeitungsprogramm ein Wert zugewiesen wird, der beispielsweise zufällig zugewiesen werden kann.

In einer weiteren Ausführungsform können die in dem Quelltext 50 abgelegten Metadaten eine Liste von Identifikatoren, beispielsweise UUIDs, für Bearbeitungsprogramme umfassen. Ein solches Metadatenfeld kann rein beispielhaft als PreviousToolEntityIDs bezeichnet werden. Auch diese Metadaten sind entsprechend dem sicherheitsrelevanten Programmteil im Quelltext zugeordnet.

In Antwort auf das Erkennen eines Unterschieds zwischen den verglichenen Prüfsummen (J in S300) kann dann ein Auslesen S700 der Liste der Identifikatoren aus den Metadaten in dem Quelltext 50 jener Bearbeitungsprogramme erfolgen, welche Änderungen und/oder Bearbeitungen am Quelltext 50 des sicherheitsrelevanten Programmteils vorgenommen haben. Dann erfolgt ein Darstellen S800 der Identifikatoren und/oder der zugehörigen Bearbeitungsprogramme auf dem Anzeigemittel 30. Hier kann das Darstellen der Identifikatoren für eine sicherheitsrelevante Programmteil zeitgeordnet (in umgekehrter Reihenfolge) erfolgen. Ferner können diese entsprechend der zeitlichen Reihenfolge (oder umgekehrt) erfolgen. Damit können Fehler oder ungewünschte Änderungen und deren Ursprung leichter lokalisiert werden. Die Ausgabe der Listen, S700 und/oder S800, kann sich in einer Ausführungsvariante auf eine begrenzte Maximalzahl gemäß einer Zeitreihenfolge reduzieren, um den Informationsgehalt der jeweiligen Quellcode-Textdateien zu begrenzen.

Zusammengefasst werden durch Metadaten in dem Quelltext 50 eines Text-basierten Programms Konsistenzprüfungen hinsichtlich Veränderung von sicherheitsrelevanten Programmteilen ermöglicht, welche von dem Bearbeitungsprogramm ausgeführt werden. Dadurch können Änderungen im Quelltext nicht unbemerkt bleiben. Daher kann eine sichere Programmierung von Programmen für Steuergeräte erreicht werden. Ferner können mittels der Metadaten die Diagnosefähigkeiten bei festgestellten Veränderungen für Textbasierte Programmierung verbessert werden. Somit kann auch im Einsatz im Steuergerät 1000, z.B. bei SPS, ein Effekt erzielt werden, da das sicherheitsrelevante Programm sicher programmiert ist, ohne dabei die Vorteile der flexiblen Text-basierten Programmierung zu reduzieren.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

S100 Auslesen von Metadaten/Prüfsumme
S200 Erzeugen einer aktuellen Prüfsumme
S300 Erkennen, ob mindestens ein sicherheitsrelevantes Programmteil verändert wurde durch Vergleich der Prüfsummen
S400 Ausgeben von einer Information an den Nutzer, dass ein sicherheitsrelevantes Programmteil verändert wurde
S500 Auslesen einer Liste von zeitlichen vorherigen Prüfsummen
S600 Darstellen der Liste von Prüfsummen
S700 Auslesen einer Liste von zeitlichen vorherigen Identifikatoren von Bearbeitungsprogrammen, welche Änderungen an sicherheitsrelevanten Programmteilen vorgenommen haben
S800 Darstellen der Liste von Identifikatoren von Bearbeitungsprogrammen
S200' Darstellen des sicherheitsrelevanten Programmteils durch Highlighten/Hervorheben
5300' Prüfen einer Änderungsberechtigung
5400' Verweigern des Änderns/Bearbeiten eines sicherheitsrelevanten Programmteils
S500' Zulassen der Änderung/Bearbeitung des sicherheitsrelevanten Programmteils
100 Vorrichtung zur Datenverarbeitung
10 Prozessor
20 Speicher
22 Bearbeitungsprogramm / Bearbeitungs-Tool
30 Anzeigemittel/Display
40 sicherheitsrelevantes Programm
50 Quelltext
1000 Steuergerät

## Patentansprüche

1. Computerimplementiertes Verfahren zur Absicherung eines in mindestens einer Textdatei geschriebenen Quelltexts (50) eines sicherheitsrelevanten Programms (40) zum Betrieb eines Steuergeräts (1000):
- Auslesen (S100) von in dem Quelltext (50) des sicherheitsrelevanten Programms (40) eingespeicherten Metadaten, wobei die Metadaten eine Prüfsumme umfassen, welche innerhalb des Quelltexts (50) einem dazu korrespondierenden sicherheitsrelevanten Programmteil zugeordnet ist, wobei die Prüfsumme auf Basis einer Zeichenkette des dazu korrespondierenden sicherheitsrelevanten Programmteils zu einem vorherigen Zeitpunkt erzeugt wurde;
- Erzeugen (S200) einer aktuellen Prüfsumme auf Basis einer Zeichenkette des sicherheitsrelevanten Programmteils;
- Erkennen (S300), ob das sicherheitsrelevante Programmteil verändert wurde durch Vergleich der aktuellen Prüfsumme mit der ausgelesenen Prüfsumme; und
- Ausgeben (S400) einer Information an den Nutzer, dass das sicherheitsrelevante Programmteil verändert wurde in Antwort auf das Erkennen eines Unterschieds zwischen den verglichenen Prüfsummen.

2. Verfahren nach Anspruch 1, wobei die Prüfsumme durch eine Hash-Funktion berechnet ist.

3. Verfahren nach einem der vorherigen Ansprüche 1 bis 2, wobei das Erzeugen (S200) der Prüfsumme durch Einlesen der Zeichenkette des sicherheitsrelevanten Programmteils in umgekehrter Zeichenreihenfolge erfolgt.

4. Verfahren nach einem der vorherigen Ansprüche 1 bis 3, wobei des Verfahren umfasst:
- Darstellen (S200'), auf einem Anzeigemittel (30), durch Hervorheben des sicherheitsrelevanten Programmteils in dem Quelltext (50), welches zu der aus den Metadaten ausgelesenen Prüfsumme korrespondiert.

5. Verfahren nach einem der Ansprüche 1 bis 4, ferner umfassend:
- Prüfen einer Änderungsberechtigung (S300') des Nutzers für das sicherheitsrelevante Programmteil mittels eines in ein Eingabefeld auf dem Anzeigemittel (30) einzugebendes Passwort und/oder einer Überprüfung einer Mindestberechtigung des Nutzers gemäß eines Rechtevergabesystems, und
- Freigeben (S500') zur Bearbeitung/Änderung des sicherheitsrelevanten Programmteils in Antwort auf eine Verifikation des vom Benutzer eingegebenen Passworts und/oder das Vorhandensein einer Mindestberechtigung des Nutzers gemäß eines Rechtevergabesystems.

6. Verfahren nach einem der vorherigen Ansprüche 1 bis 5, wobei die in dem Quelltext (50) abgelegten Metadaten eine Liste von zeitlich vorherigen Prüfsummen des sicherheitsrelevanten Programmteils umfassen, und das Verfahren in Antwort auf das Erkennen (S300) eines Unterschieds zwischen den verglichenen Prüfsummen ferner umfasst:
- Auslesen (S500) der Liste von zeitlichen vorherigen Prüfsummen des sicherheitsrelevanten Programmteils aus den Metadaten in dem Quelltext (50), und
- Darstellen (S600) der Liste der zeitlich vorherigen Prüfsummen auf dem Anzeigemittel (30).

7. Verfahren nach einem der vorangehenden Ansprüche 1 bis 6, ferner umfassend:
- Erzeugen eines Identifikators für ein Bearbeitungsprogramm (22) durch welches Änderungen und/oder Bearbeitungen am Quelltext (50) vorgenommen sind, und
- Einschreiben des Identifikators als Metadaten in den Quelltext für sicherheitsrelevante Programmteile, welche vom jeweiligen Bearbeitungsprogramm geändert oder bearbeitet wurden (50).

8. Verfahren nach einem der Ansprüche 1 bis 7, wobei die in dem Quelltext (50) abgelegten Metadaten eine Liste von Identifikatoren für Bearbeitungsprogramme umfassen, und das Verfahren in Antwort auf das Erkennen (S300) eines Unterschieds zwischen den verglichenen Prüfsummen ferner umfasst:
- Auslesen (S700) der Liste der Identifikatoren für das sicherheitsrelevante Programmteil aus den Metadaten in dem Quelltext (50), welche Änderungen und/oder Bearbeitungen am Quelltext (50) vorgenommen haben, und
- Darstellen (S800) der Identifikatoren und/oder der zugehörigen Bearbeitungsprogramme auf dem Anzeigemittel (30).

9. Verfahren nach Anspruch 8, wobei das Darstellen der Identifikatoren und/oder der zugehörigen Bearbeitungsprogramme für das sicherheitsrelevante Programmteil zeitgeordnet erfolgt.

10. Verfahren nach einem der vorangehenden Ansprüche, wobei das Ausgeben (500) einer Information ein optisches und/oder akustisches Signalisieren umfasst.

11. Verfahren nach einem der vorangehenden Ansprüche, wobei das sicherheitsrelevante Programm (40) zum Betrieb eines Steuergeräts (1000) ausgelegt ist, um zumindest einen Teil einer elektrischen Anlage zu steuern.

12. Bearbeitungsprogramm (22), umfassend Befehle, die bei der Ausführung durch einen Prozessor (10) diesen veranlassen, das Verfahren nach einem der Ansprüche 1 bis 11 auszuführen.

13. Vorrichtung (100) zur Datenverarbeitung, umfassend einen Prozessor (10), welcher mit einem Speicher (20) operativ verbunden ist und eingerichtet ist, das Verfahren gemäß einem der Ansprüche 1 bis 11 auszuführen.

14. Computerlesbares Medium, umfassend Befehle, die bei der Ausführung durch einen Computer oder Prozessor diesen veranlassen, die Schritte des Verfahrens gemäß der Ansprüche 1 bis 11 durchzuführen.
